# FASCICULE DE BREVET EUROPEEN

(11) **EP 2 536 896 B1**
(45) Date de publication et mention de la délivrance du brevet: **11.06.2014**
(21) Numéro de dépôt: 11712914.8
(22) Date de dépôt: 15.02.2011
(51) Int. Cl.: E04D 11/00, F24J 2/52

(54) **DISPOSITIF DE FIXATION DE PLAQUES OU DE PANNEAUX SUR UNE COUVERTURE ET COUVERTURE COMPOSITE RESULTANTE**
VORRICHTUNG ZUR BEFESTIGUNG VON PLATTEN ODER TAFELN AN EINER ABDECKUNG UND RESULTIERENDE VERBUNDABDECKUNG
DEVICE FOR FIXING PLATES OR PANELS TO A COVER, AND RESULTING COMPOSITE COVER

(30) Priorité: 16.02.2010 FR 1051094
(43) Date de publication de la demande: 26.12.2012
(73) Titulaire: SOPREMA (SAS), 67100 Strasbourg (FR)
(72) Inventeur: BINDSCHEDLER, Pierre Etienne, F-67210 Obernai (FR); PERRIN, Rémi, F-67530 Boersch (FR); FULCRAND, Damien, F-67100 Strasbourg (FR); DESGOUILLES, Henri, F-75011 Paris (FR); VOGES, André, F-67140 Saint-Pierre (FR)
(74) Mandataire: Nuss, Laurent
(86) Numéro de dépôt international: PCT/FR2011/050321
(87) Numéro de publication internationale: WO 2011/101589

(56) Documents cités:
- DE-A1- 10 062 697
- DE-A1-102006 022 455
- DE-A1-102006 022 870
- DE-U1- 20 006 328
- DE-U1-202004 005 224
- DE-U1-202005 015 455
- DE-U1-202009 013 142
- GB-A- 2 378 457
- US-A1- 2009 230 265

## Description

La présente invention concerne le domaine des toitures des bâtiments ou des couvertures des constructions, plus particulièrement les couvertures étanches intégrant un ou des revêtements d'étanchéité formé(s) de membranes ou de feuilles souples et partiellement déformables et a pour objet un dispositif de fixation d'éléments en forme de plaques, panneaux ou analogues sur de telles couvertures de toits.

L'invention concerne plus spécifiquement la fixation de panneaux photovoltaïques.

De nombreux systèmes de montage d'éléments en plaques, panneaux ou analogues sur des couvertures de toits ont déjà été proposés.

Ces systèmes connus mettent généralement en oeuvre des éléments d'entretoisement et de support localisés (ou ponctuels) ou profilés (ou linéaires), permettant de supporter les plaques ou panneaux à distance de la couverture de toit concernée.

Par ailleurs, différents modes de fixation ou de liaisonnement d'un revêtement d'étanchéité à son support font partie de l'état de la technique et des connaissances de l'homme du métier. Ce support peut être constitué, par exemple, d'un isolant thermique, d'une dalle de béton, d'une couverture en bois ou en dérivés de bois, d'une couverture métallique ou autre.

En général, les revêtements d'étanchéité sont liaisonnés au support (par adhérence thermique ou adhésive, par semi-adhérence, par fixation mécanique) directement au niveau de l'élément porteur ou de la charpente, ou plus généralement avec interposition d'un isolant thermique entre l'élément porteur et ledit revêtement d'étanchéité. Ce liaisonnement permet notamment que l'étanchéité, formant la couche exposée, résiste aux effets de dépression et aux sollicitations d'arrachement du vent.

Lorsqu'aucun liaisonnement particulier du revêtement avec son support, ni directement avec l'élément porteur, n'est prévu, il est dit posé en indépendance. Dans ce cas, un lestage est nécessaire pour empêcher qu'il ne se détache de la toiture et qu'il ne s'envole, ce lestage se présentant par exemple sous forme de gravillons, de dalles, de dallettes ou d'autres éléments de couverture massifs, ce en fonction également de l'accessibilité ou non de la toiture concernée.

La présente invention concerne plus particulièrement des systèmes de toiture dans lesquels des éléments en plaques, panneaux ou analogues présentant un poids insuffisant pour résister à l'action du vent sont mis en place sur un revêtement d'étanchéité liaisonné à son support, ledit revêtement devant, par conséquent, contribuer à la résistance au vent des panneaux ou plaques rapporté(e)s.

Un objectif recherché par l'invention est d'éviter de percer, d'interrompre ou de générer une discontinuité quelconque dans le revêtement d'étanchéité, qui serait induite par exemple par des fixations mécaniques traversantes venant s'ancrer directement dans l'élément porteur ou la charpente ou par la mise en place de potelets ou de plots support fixés sur cet élément porteur ou sur la charpente.

Par le document US 4 546 580, on connaît déjà une construction de toit comprenant des plots qui supportent des panneaux légers, en les maintenant, et qui reposent sur un revêtement d'étanchéité auquel ils sont reliés par collage de leur platine.

Toutefois, ce système connu nécessite obligatoirement la mise en oeuvre d'un agent collant spécifique et, compte tenu de la surface limitée de la platine de l'embase de ce plot, la surface de collage est nécessairement limitée, ce qui entraîne une localisation des efforts au niveau du revêtement d'étanchéité en cas de coup de vent et une limitation de la force d'adhérence totale.

En outre, le plot (généralement en métal ou en un plastique dur) et le revêtement d'étanchéité (généralement une membrane ou une couche synthétique ou bitumineuse) étant réalisés en des matériaux différents, leur comportement face aux variations de température peut être très différent et ainsi générer des contraintes locales pouvant aboutir à un décollement du plot ou à une rupture du revêtement d'étanchéité.

Enfin, du fait du poids important susceptible d'être supporté par chaque plot, des contraintes de cisaillement élevées peuvent être exercées par le bord de la platine du plot sur les zones sous-jacentes du revêtement d'étanchéité, pouvant conduire à une rupture de ce dernier.

Dans le document FR 2 713 687, sont évoqués des supports quasi-ponctuels pour éléments de surtoiture, lesquels peuvent être collés sur un revêtement d'étanchéité.

En plus des inconvénients déjà évoqués en relation avec le document US ci-dessus, ces supports présentent les inconvénients supplémentaires de ne pas être réglables en hauteur et de ne pouvoir supporter chacun qu'un seul élément de surtoiture.

Enfin, le document DE-A-10 2006 022 455 divulgue un dispositif de fixation d'éléments en forme de plaques ou de panneaux sur la couche supérieure étanche d'un toit. Ce dispositif comprend essentiellement des plots individuels à hauteur réglable formés chacun, d'une part, d'une embase avec une platine inférieure destinée à prendre appui sur la couche supérieure du toit et à être solidarisée à cette dernière et, d'autre part, d'une tête destinée à supporter un ou plusieurs élément(s) en forme de plaque(s).

Chaque embase est réalisée d'un seul tenant en un matériau thermoplastique et comprend un noyau dur et une partie inférieure ou de base molle, d'où il résulte une fabrication particulière et l'obligation d'une fixation par collage sur la couche étanche lorsqu'on veut éviter un perçage de cette dernière.

La présente invention a pour but de pallier au moins certains des inconvénients présentés.

A cet effet, elle a pour objet un dispositif de fixation d'éléments en forme de plaques, de panneaux ou analogues sur une couverture de toit de bâtiment, à distance de cette dernière, ladite couverture comportant en surface un revêtement ou une couche d'étanchéité rapporté(e) sur le support sensiblement continu formant le toit, sur une couche ou un revêtement d'étanchéité sous-jacent, ou sur une couche d'isolation thermique recouvrant ce support, ce dispositif comprenant des plots d'appui et de maintien à hauteur réglable ou non pour les éléments en forme de plaques, panneaux ou analogues, chacun de ces plots présentant une embase avec une platine inférieure destinée à prendre appui sur la surface de la couverture et à être solidarisée à cette dernière et une tête ou partie supérieure destinée à supporter directement ou indirectement un ou plusieurs éléments en forme de plaques, panneaux ou analogues,
dispositif caractérisé en ce que la platine de l'embase d'au moins certains plots, préférentiellement de chaque plot, est pourvue en sous-face d'une portion de plaque, de panneau, de membrane ou de feuille rapportée formant plastron, dont la surface est préférentiellement supérieure à celle de la platine,
en ce que chaque plastron consiste en un matériau compatible et/ou de même nature que la couche ou le revêtement en surface de la couverture et est apte à être lié à cette couche ou à ce revêtement par une liaison adhérente, et
en ce que chaque plastron est fixé mécaniquement à la platine de l'embase du plot correspondant, le matériau du plastron présentant avantageusement une résistance importante à la déformation et au déchirement.

L'invention porte également sur des plots mis en oeuvre dans un tel dispositif de fixation, les corps desdits plots pouvant être soit réalisés en deux parties assemblées entre elles et mutuellement coopérantes, soit réalisés d'un seul tenant avec éventuellement une structure allongée ou profilée dans une direction donnée.

Enfin, l'invention concerne aussi un système de toiture mettant en oeuvre un dispositif de fixation du type précité, ce dernier pouvant éventuellement comprendre des plots des deux types, à savoir à corps monobloc ou à deux composantes assemblées par montage.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
La figure 1 est une vue partielle éclatée, en élévation latérale et en coupe, d'un dispositif de fixation selon un premier mode de réalisation de l'invention monté sur une couverture étanche ;
La figure 2 est une vue partielle en élévation latérale et en coupe d'un dispositif de fixation selon un second mode de réalisation de l'invention monté sur une couverture étanche ;
La figure 3 est une vue partielle en élévation latérale et en coupe d'un dispositif de fixation selon une variante du second mode de réalisation monté sur une couverture étanche ;
La figure 4 est une vue partielle de dessus et par transparence d'une partie d'un exemple de système de toiture selon l'invention illustrant la structure du dispositif de fixation, avec mise en oeuvre de plots selon l'une quelconque des variantes des figures 1 à 3 ;
les figures 5A et 5B sont des similaires à celles des figures 1 à 3, représentant deux autres variantes, compatibles entre elles, de réalisation d'un plot faisant partie d'un dispositif de fixation selon l'invention ;
la figure 6A est une vue partielle en perspective d'un plot selon un autre mode de réalisation de l'invention, et,
la figure 6B est une vue partielle en coupe, à travers un plot, d'un dispositif de fixation mettant en oeuvre un plot tel que représenté figure 6A.

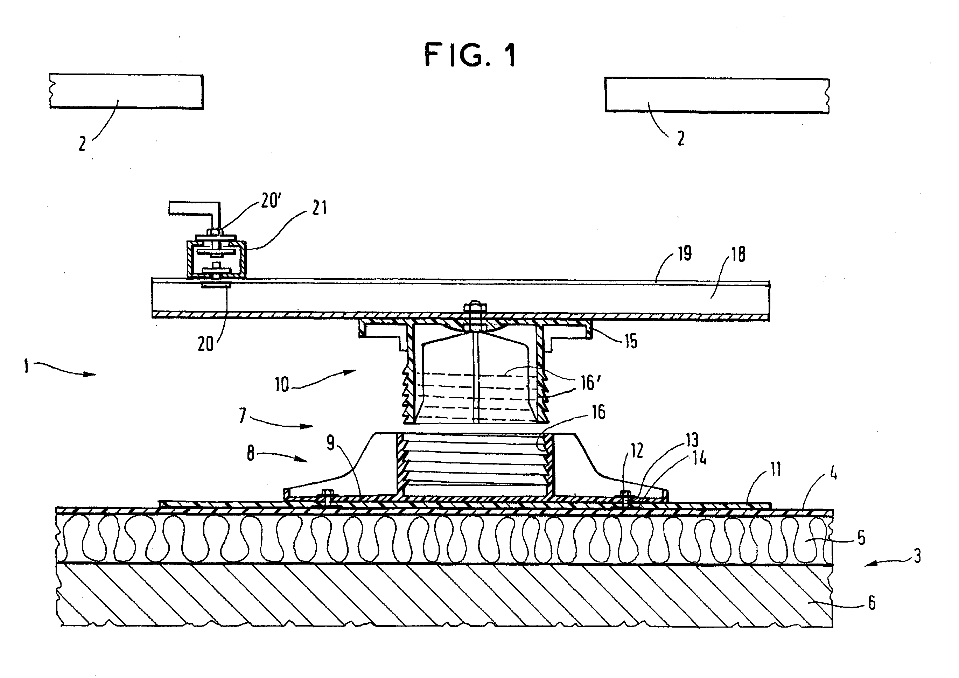

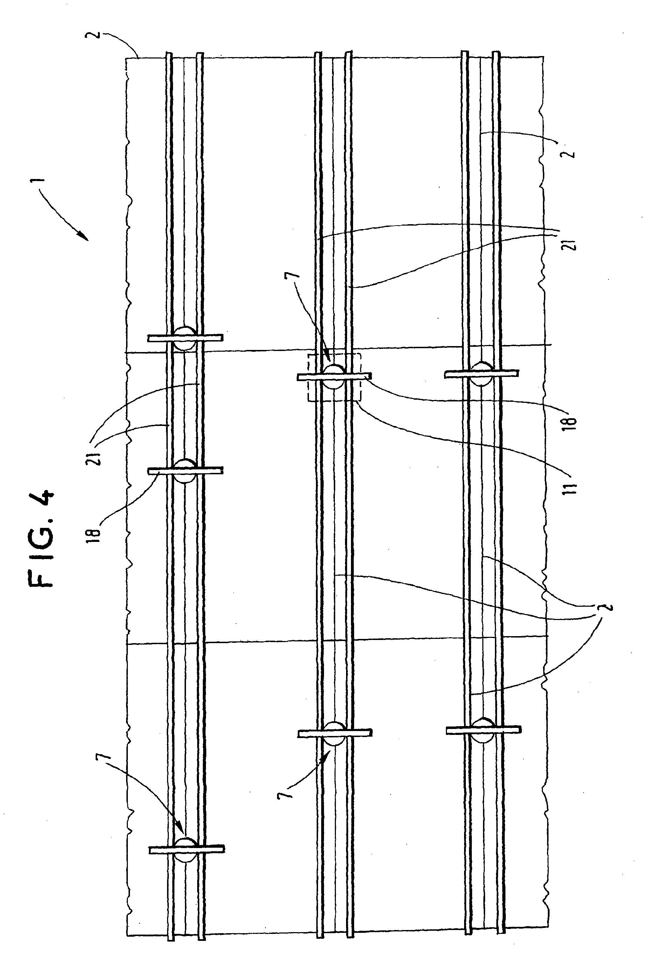

Les figures 1 à 4, 5A, 5B et 6B des dessins annexés montrent partiellement un dispositif 1 de fixation d'éléments 2 en forme de plaques, de panneaux ou analogues sur une couverture 3 de toit de bâtiment, à distance de cette dernière.

Cette couverture 3 comporte en surface un revêtement ou une couche d'étanchéité 4 rapporté(e) sur le support 6 sensiblement continu formant le toit, sur une couche ou un revêtement d'étanchéité sous-jacent, ou sur une couche d'isolation thermique 5 recouvrant ce support 6 (variante de construction représentée sur les figures 1, 2 et 6B).

Le dispositif de fixation 1 comprend des plots 7 d'appui et de maintien à hauteur réglable pour les éléments 2 en forme de plaques, panneaux ou analogues, chacun de ces plots 7 présentant une embase 8 avec une platine inférieure 9 destinée à prendre appui sur la surface de la couverture 3 et à être solidarisée à cette dernière et une tête ou partie supérieure 10 destinée à supporter directement ou indirectement un ou plusieurs éléments 2 en forme de plaques, panneaux ou analogues (plaque inférieure 9 d'appui et de solidarisation).

Les plots 7, ou au moins certains des plots 7, peuvent éventuellement être non réglables en hauteur.

Conformément à l'invention, la platine 9 de l'embase 8 d'au moins certains plots 7, préférentiellement de chaque plot 7, est pourvue en sous-face d'une portion 11 de plaque, de panneau, de membrane ou de feuille rapportée formant plastron et dont la surface est préférentiellement supérieure à celle de la platine 9. Ce plastron 11 consiste en un matériau compatible et/ou de même nature que la couche ou le revêtement en surface 4 de la couverture 3 et est lié à cette couche ou à ce revêtement 4 par une liaison adhérente.

L'utilisation d'un tel plastron 11 de liaisonnement, intercalé après montage du plot 7 entre la platine 9 de l'embase 8 de ce dernier et la couche ou le revêtement d'étanchéité 4, permet, d'une part, d'aboutir à une liaison très résistante avec une répartition des sollicitations en traction sur une grande zone de la couche ou du revêtement 4 et, d'autre part, de limiter les sollicitations en cisaillement ou en coupe exercées au niveau du bord de la platine 9 sur ladite couche ou ledit revêtement (fonction de coussinet d'amortissement du plastron 11).

De plus, compte tenu de la nature du matériau formant ce plastron 11, son comportement en température (notamment en contraction et en dilatation) sera similaire, voire identique, à celui de la couche ou du revêtement 4, évitant la génération de contraintes au niveau de l'interface de contact entre ces deux composants.

Bien que d'autres types de liaisonnement puissent être envisagés, chaque plastron 11 est préférentiellement fixé mécaniquement à la platine 9 de l'embase 8 du plot 7 correspondant et son matériau constitutif présente une résistance importante à la déformation et au déchirement.

Ainsi, aucun problème de compatibilité de matériaux ne se pose entre la platine et le plastron.

En fonction notamment de la nature de la couche 4 de l'application visée et/ou des performances recherchées, des plastrons 11 de type, de nature et de dimensions variés peuvent être associés à un même type de plots 7.

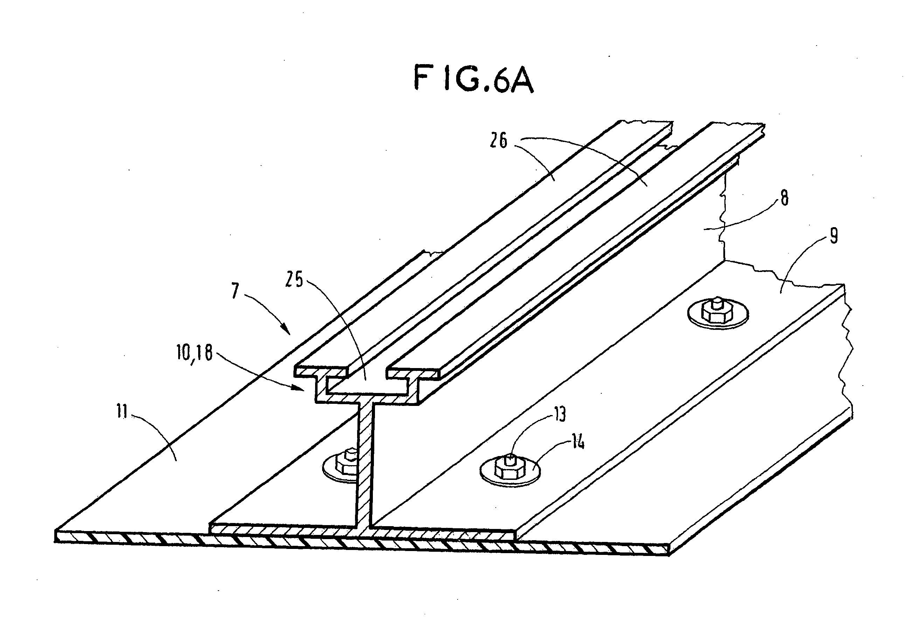

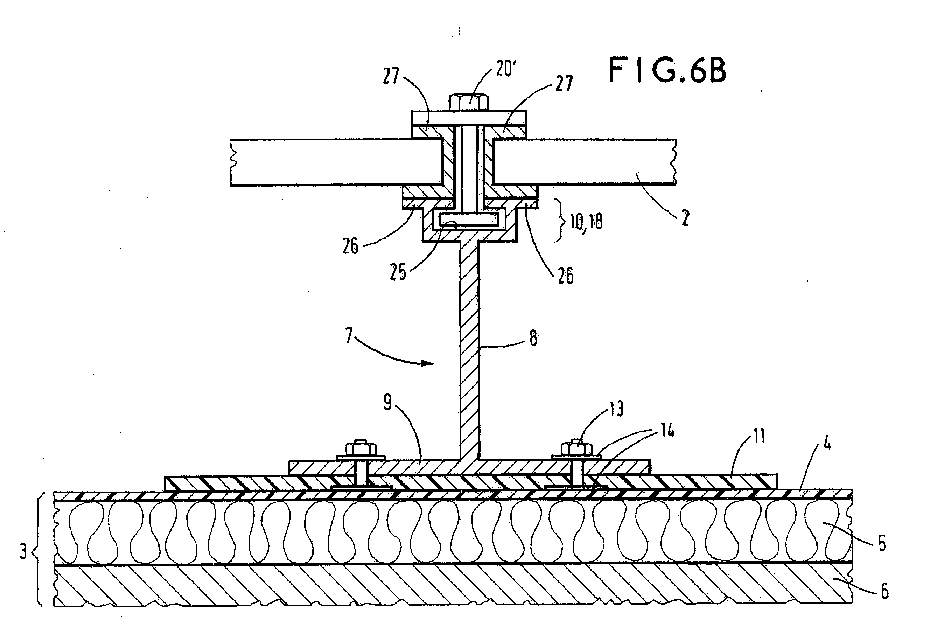

En accord avec l'invention, les plots 7 peuvent être à hauteur réglable (figures 1 à 5) ou non (figures 6), avoir un corps 8, 10 d'un seul tenant (figures 6) ou en deux parties coopérantes (figures 1 à 5) ou encore fournir soit un point d'ancrage et d'appui localisé (relativement ponctuel), soit un support à extension linéaire.

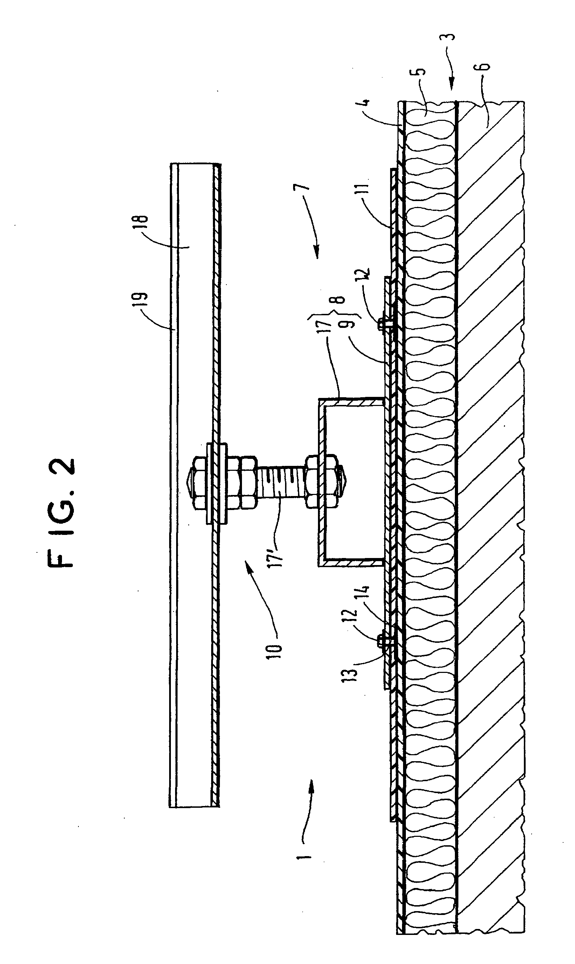

Dans ce dernier cas, la partie supérieure ou tête 10 au moins de plots 7 présente une extension plus importante selon une direction, préférentiellement une constitution profilée (figures 2 et 6A).

Selon une première variante de réalisation pratique, représentée aux dessins annexés, la fixation mécanique est réalisée en plusieurs points 12, préférentiellement répartis sur le pourtour ou le long de la platine 9 de l'embase 8 du plot 7, chaque point 12 comprenant un élément 13 de fixation mécanique traversant le plastron 11 et associé à une plaquette ou une rondelle 14 destinée à presser localement ledit plastron 11 contre ladite platine 9.

Selon une seconde variante de réalisation pratique, non représentée aux dessins annexés, la fixation mécanique est réalisée par pincement d'une partie au moins du plastron 11 entre la platine 9 de l'embase 8 du plot 7 et une contreplaque reliée à ladite platine 9 par des éléments de fixation traversant ledit plastron 11.

La liaison adhérente surfacique entre le plastron 11 et la couche ou le revêtement 4 en surface de la couverture 3 peut être réalisée selon différentes techniques connues de l'homme du métier, ce le cas échéant en fonction de la nature et du type des matériaux constituant le plastron 11 et la couche ou le revêtement 4.

Conformément à l'invention, le plastron 11 est réalisé en un matériau apte et destiné à former une liaison adhérente surfacique avec la couche ou le revêtement en surface de la couverture, ladite liaison étant du type choisi dans le groupe formé par les liaisons par collage avec un agent collant rapporté, les liaisons par adhésion à froid et les liaisons par soudure, ladite liaison surfacique adhérente étant prévue pour s'étendre préférentiellement sensiblement à la totalité de la surface du plastron.

Ainsi, cette liaison adhérente surfacique peut consister par exemple en :
- une liaison par collage, l'agent collant étant un agent additionnel rapporté,
- une liaison par adhésion à froid, la sous-face du plastron 11 comportant un revêtement présentant des propriétés adaptées (par exemple sous-face autocollante).

Toutefois, en accord avec une variante de réalisation très avantageuse de l'invention, évitant la mise en oeuvre d'un agent collant additionnel ou d'un revêtement de sous-face particulier du plastron 11, la liaison adhérente surfacique entre ce dernier et la couche ou le revêtement 4 en surface de la couverture 3 est une liaison par soudure (par exemple à la flamme d'un chalumeau ou à l'air chaud), le plastron 11 et la couche ou revêtement en surface 4 étant alors préférentiellement à base de membrane d'étanchéité bitumineuse ou synthétique.

En vue d'aboutir à une valeur de force d'adhérence maximale, la liaison adhérente surfacique entre le plastron 11 et la couche ou le revêtement en surface 4 de la couverture 3 s'étend sensiblement à la totalité de la surface de la sous-face du plastron 11 (les plaquettes ou rondelles 14 ou la contreplaque mentionnée(s) précédemment correspondant à des zones adhérentes ou non à la couche ou au revêtement 4).

Bien qu'une surface du plastron 11 supérieure à celle de la platine 9 permette d'atteindre des performances d'adhésion plus élevées, il est également possible d'envisager des surfaces égales, voire une surface inférieure pour le plastron 11, en particulier lorsque les performances recherchées sont plus limitées et/ou que la nature de la liaison fournit des performances suffisantes.

Aucune fonction d'étanchéité n'étant spécifiquement recherchée, ladite liaison adhérente peut être soit de nature continue au niveau de la sous-face du plastron 11, soit de nature discontinue avec création de zones non liées, radiales ou périphériques.

A titre d'exemples non limitatifs de types de revêtements d'étanchéité, on peut citer, d'une part, ceux en bitume modifié, préférentiellement sans autoprotection, permettant un liaisonnement rapide du plastron 11 et, d'autre part, ceux sous forme de membranes à base de résines synthétiques souples ou rigides (naturellement sans autoprotection).

Le revêtement d'étanchéité 4 peut être avantageusement un bicouche bitumineux, qui correspond à une solution à très haute fiabilité et durabilité, reposant directement sur le support 6 ou généralement sur une couche d'isolation thermique 5.

A titre d'exemple pratique de revêtement d'étanchéité, on peut évoquer un système standard constitué de deux feuilles en bitume modifié par SBS, la première couche d'épaisseur 2,5 mm étant armée par un non tissé de voile de verre de 50 g/m², la deuxième couche étant également de 2,5 mm d'épaisseur et armée aussi par un voile de verre de 50 g/m².

Un système hautement renforcé cité comme exemple peut-être constitué de deux feuilles en bitume modifié SBS, la première de 2,5 mm d'épaisseur étant armée par un composite polyester-verre de 130 g/m² et la deuxième couche de 3,5 mm étant année par un composite polyester-verre de 250 g/m².

Parmi les techniques connues de l'homme de l'art, le revêtement d'étanchéité est relié à son support au minimum en semi-indépendance et préférentiellement en adhérence.

L'exemple le plus courant de mode de pose en semi-indépendance est celui par fixation mécanique directement liée à l'élément porteur ou au support 6.

Comme indiqué précédemment, un système bicouche devrait être privilégié. Les feuilles de première couche sont alors assemblées selon la description développée par exemple dans l'Avis technique 5/06-1903, en étant posées librement sur leur support qui est en général un panneau isolant de 10 cm d'épaisseur par exemple, puis leurs recouvrements de plusieurs centimètres de largeur et incluant la fixation mécanique traversante sont soudés afin de les rendre étanches. Les feuilles de la deuxième couche sont ensuite soudées en plein sur celles de la première couche.

Comme déjà indiqué précédemment, il y a de manière générale pratiquement toujours un isolant sous le revêtement d'étanchéité.

Les isolants particulièrement adaptés dans le cadre de l'invention en tant que supports de l'étanchéité, ainsi que les éléments 2 en panneaux rigides rapportés, sont de classe C en résistance à la compression selon le guide UEATC.

Cette catégorie de panneaux est classiquement utilisée dans le cas de toitures avec dalles sur plots pour terrasses accessibles au public. La résistance à la compression de l'isolant est en effet un paramètre pratique important, en particulier en relation avec les fortes contraintes mécaniques engendrées sur le chantier lors de la mise en oeuvre des panneaux 2 sur le dispositif de fixation 1.

Il est entendu par ailleurs que tout panneau isolant apte à recevoir, en pleine adhérence ou semi-adhérence, un revêtement d'étanchéité fait état de sa propre performance vis-à-vis du vent, fonction notamment de sa cohésion interne. Cette aptitude est déduite généralement de sa résistance en traction perpendiculaire aux deux faces du panneau isolant.

Les plastrons 11 susceptibles d'être utilisés dans le cadre de l'invention peuvent être de différents types et de différentes natures de matériaux.

Ainsi, selon une première variante pratique, le plastron 11 peut consister en une partie de feuille ou de membrane bitumineuse (par exemple de taille 40 cm x 40 cm) avec soit une face supérieure autoprotégée par paillettes d'ardoise, soit une face supérieure en bitume modifié par SEBS résistant aux UV.

La feuille autoprotégée par paillettes, définie dans son Avis technique CSTB n° 5/08-1993, est une membrane d'épaisseur 4 mm à base de bitume modifié par élastomère SBS, armée par un support polyester non tissé de 250 g/m² à forte résistance mécanique en traction (de l'ordre de 1000 N/5 cm selon EN 12311-1) et une résistance importante à la déchirure au clou (de l'ordre de 300 N selon EN 12310-1).

La feuille avec surface en bitume modifié par SEBS, définie dans son Avis technique CSTB n° 21/09-06, est une membrane de 3,5 mm d'épaisseur, armée par un support composite polyester-verre de 250 g/m2 de résistance en traction de 1500 N/5 cm et une aptitude vis-à-vis de la déchirure de 250 N environ.

La feuille bitumineuse peut également être à base de bitume modifié par PPA (polypropylène atactique), avec une face supérieure sans autoprotection.

Conformément à une seconde variante pratique, le plastron 11 peut consister en une portion de membrane synthétique souple du type TPO (thermoplastiques polyoléfines) ou PVC (polychlorure de vinyle), par exemple de 30 cm x 30 cm.

Ces deux membranes synthétiques, par exemple d'épaisseur 1,5 mm, peuvent être armées par une grille de polyester de 110 g/m² à forte résistance en traction (d'au moins 1000 N /5 cm selon EN 12311-2) et à aptitude très élevée contre la déchirure (250 N selon EN 12310-2).

Conformément à une troisième variante pratique, le plastron 11 peut consister en une plaque ou membrane synthétique rigide (par exemple de 20 cm x 20 cm) à base par exemple de PE HD (polyéthylène haute densité). Une telle membrane synthétique a une résistance mécanique en traction et une aptitude vis-à-vis de la déchirure suffisantes sans que cette membrane ne soit armée.

Enfin, il peut également être envisagé de mettre en oeuvre un plastron 11 à deux composantes (structure stratifiée), la composante supérieure étant compatible avec la platine et la composante inférieure avec le revêtement d'étanchéité.

La constitution des plots 7 peut être variée, monobloc ou autorisant au moins une possibilité de réglage de sa hauteur, pour autant qu'elle permette auxdits plots 7 de résister aux sollicitations en traction et en compression résultant de l'application selon l'invention.

Ainsi, les plots 7 peuvent être réalisés en des matériaux plastiques ou métalliques, être creux ou pleins, être formés d'un seul tenant avec la platine inférieure 9 ou être constitués de plusieurs parties assemblées entre elles de manière démontable ou non.

Ces corps 8 et 10 peuvent être, au moins pour l'un, de nature massive mais, de manière préférée, ils se présentent tous deux sous forme de corps creux, avantageusement cylindriques.

En accord avec un premier mode de réalisation avantageux non limitatif, dont une variante de construction possible est représentée schématiquement sur la figure 1 des dessins annexés, chaque plot 7 est constitué de deux corps 8, 10, préférentiellement réalisés en un matériau synthétique et correspondant respectivement à l'embase 8 et à la tête 10, dont chacune est munie d'une platine 9, 15, les deux corps 8, 10 comportant des rampes de vissage 16, 16' mutuellement coopérantes qui réalisent l'assemblage desdits corps 8, 10 et permettent d'ajuster la distance entre la platine supérieure 15 équipant la tête 10 et la platine inférieure 9 équipant l'embase 8.

En accord avec un second mode de réalisation avantageux non limitatif, représenté schématiquement sur la figure 2 des dessins annexés, chaque plot 7 est composé, d'une part, d'une embase 8 formée d'une platine 9 prolongé par ou portant un corps de liaison intermédiaire 17 et, d'autre part, d'une tête 10 formée d'une tige filetée 17' ou d'un élément saillant de fixation ou de liaison mécanique analogue et d'un élément support 18 allongé ou surfacique relié rigidement à ladite tige 17' ou analogue, elle-même reliée rigidement au corps intermédiaire de liaison 17, la liaison [élément support 18 / tige filetée ou analogue 17'] et/ou la liaison [tige filetée ou analogue 17' / corps de liaison intermédiaire 17] autorisant un réglage en hauteur du plot 7 considéré, avec possibilité de blocage en position.

La tige filetée 17' peut, par exemple, être fixée à la paroi du corps de liaison 17 par un système d'écrou/contre-écrou (figure 2) et l'élément ou le corps support allongé ou profilé 18 être solidarisé rigidement à l'extrémité supérieure de cette tige 17' par un système de fixation similaire, avec éventuelle interposition de rondelles (figure 2).

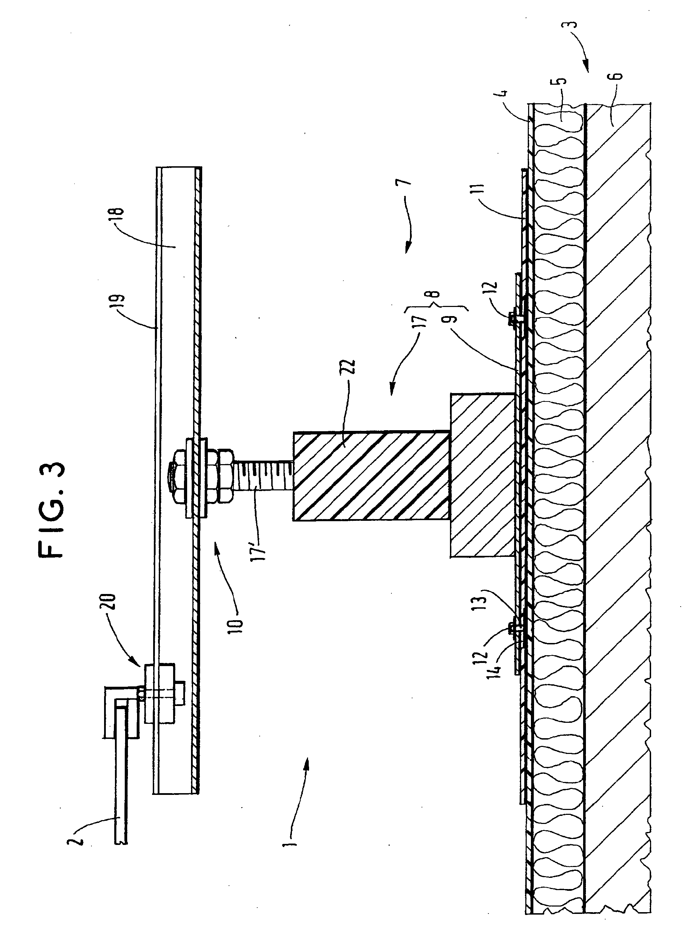

Conformément à une variante du second mode de réalisation, représentée sur la figure 3, il peut être prévue qu'au moins certains des plots 7 comportent au niveau de l'embase 8, au niveau de la tête 10 ou encore entre ces deux parties constitutives du plot considéré 7, un moyen 22 d'amortissement et/ou d'absorption des chocs et vibrations, par exemple sous la forme d'un cylindre bloc en un matériau élastomère.

Le moyen 22 peut être intégré dans l'embase 8 (Figure 3) ou encore être intégré à la tige filetée 17' (comportant deux extrémités filetées de part et d'autre du bloc amortisseur 22).

En accord avec un troisième mode de réalisation de l'invention, représenté aux figures 6A et 6B des dessins, chaque plot 7 peut, en variante, comprendre un corps 8, 10 présentant une structure monobloc, l'embase 8 et la tête 10 étant formées d'un seul tenant, l'embase 8 comportant, par exemple, en plus de la platine 9, une paroi verticale reliant cette dernière à la tête 10.

Avantageusement, le corps 8, 10 peut consister en un segment de profilé métallique, la tête 10 formant un rail avec une rainure 25 longitudinale centrale apte à recevoir des moyens d'accrochage 20, 20' et avec deux ailes latérales 26 situées de part et d'autre de la rainure 25, formant des bandes d'appui longitudinales.

Selon une caractéristique avantageuse de l'invention, la tête ou partie supérieure 10 de chaque plot 7 intègre ou est solidaire d'un corps support allongé ou profilé 18, tel que par exemple un rail s'étendant sensiblement parallèlement à la platine 9 de l'embase 8 du plot 7 considéré, ledit élément support allongé ou profilé 18 comportant des sites d'ancrage 19, discrets ou continus, pour des moyens 20 d'accrochage, soit directement des éléments 2 en forme de plaques, panneaux ou analogue, soit de seconds éléments support ou de rails profilés 21 portant et maintenant ces éléments 2, par exemple par l'intermédiaire de seconds moyens d'accrochage 20' ou encore de pièces de montage intermédiaires 23, 23' pour ces seconds éléments support profilés 21 (figures 1 à 3 et 5A et 5B).

Une telle construction permet de disposer d'une pluralité de points support pour les éléments 2, autorisant chaque plot à participer au support de plusieurs éléments 2, même lorsque ces derniers sont écartés les uns des autres et sont éventuellement de types différents (c'est-à-dire selon plusieurs des variantes des figures 1 à 6). De plus, le positionnement relatif plots 7 / éléments 2 peut être modifié et ajusté, ce qui facilite l'installation desdits plots 7 sur site (la précision d'installation pouvant être moindre).

La fixation du corps support profilé 18 sur la platine supérieure 15 du plot 7 de la figure 1 peut, par exemple, être réalisée au moyen d'un insert fileté ou non, surmoulé par le matériau de la platine et destiné à recevoir un élément de fixation mécanique.

Il convient de noter que lesdits éléments 2 peuvent, en variante, également reposer directement sur la platine 15 dans le cadre de la première variante de réalisation des plots 7.

Ces derniers peuvent, par exemple, en termes dé construction, correspondre sensiblement aux plots décrits et représentés dans les documents EP 0 259 237 et FR 2 638 477 au nom de la demanderesse.

L'élément ou le corps support 18 peut être réglable dans sa position ou son orientation angulaire autour de la tête 10 (tige filetée 17 ou platine supérieure 15) et éventuellement également dans sa direction longitudinale par prévision d'un site de fixation allongé dans le corps ou élément 18 (trou oblong par exemple).

Comme cela ressort partiellement de la figure 1, les corps support allongés ou profilés 18 des plots 7 peuvent former avec les seconds éléments support profilés 21 une ossature bidimensionnelle de support et de fixation des éléments 2 en forme de plaques, panneaux ou analogues.

Une telle ossature permet de répartir de façon optimale le poids de l'ensemble des éléments 2 au niveau des plots 7 et de conférer à l'ensemble plots 7 / éléments 2 une cohésion structurelle.

Par ailleurs, la faculté de réglage en hauteur des plots 7 permet d'ajuster l'inclinaison ou de régler le parallélisme entre les éléments 2 et la couverture 3, ainsi qu'éventuellement de compenser une déformation locale de cette couverture 2.

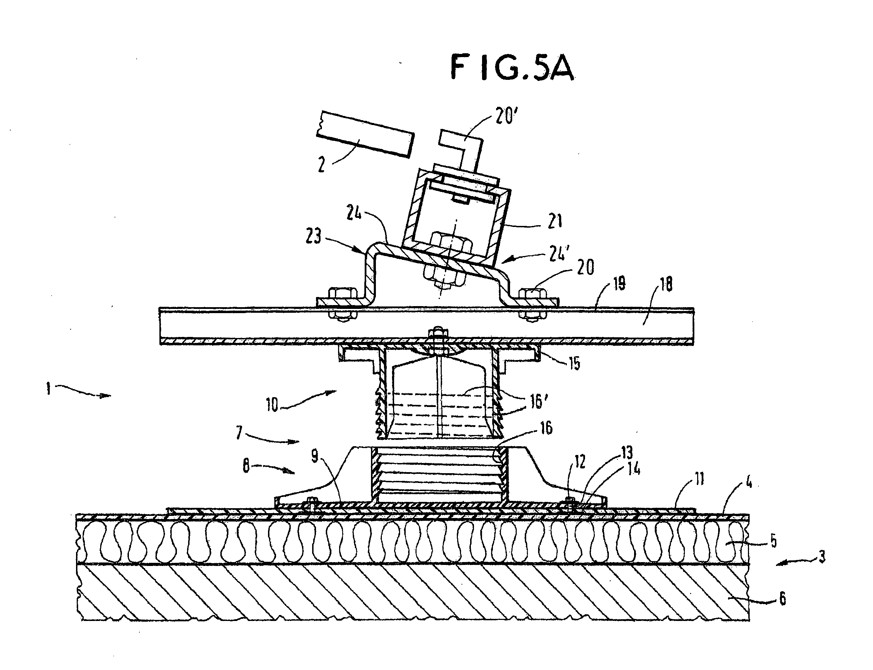

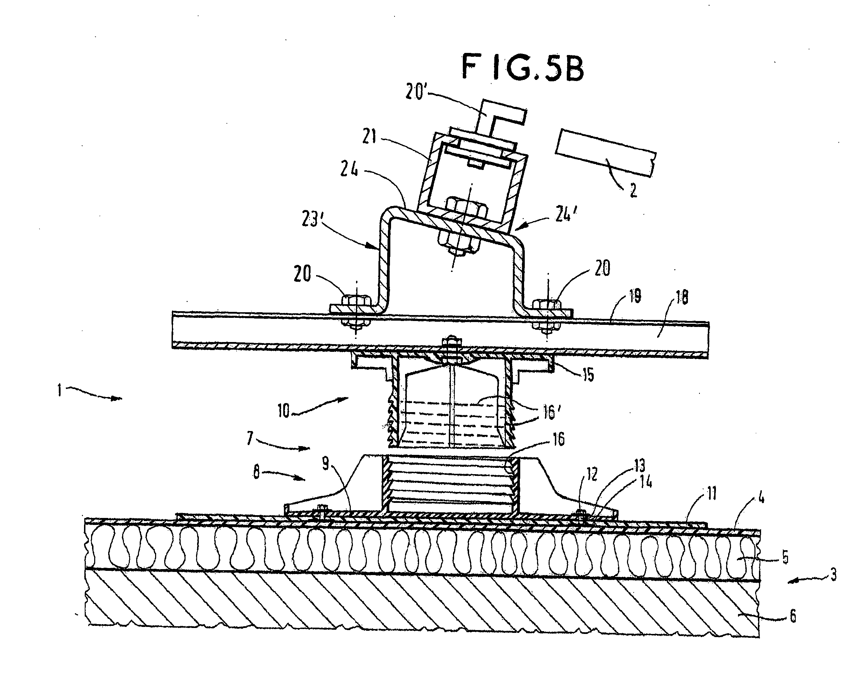

En accord avec une variante supplémentaire de l'invention, représentée aux figures 5A et 5B des dessins, les pièces de montage 23, 23' consistent en des étriers intermédiaires d'au moins deux tailles différentes, chaque étrier 23, 23' présentant des pattes inférieures d'accrochage 20 destinées à se fixer dans les site d'ancrage 19 des corps support 18 et une partie supérieure 24 avec un site de montage incliné 24' pour les seconds éléments supports ou rails profilés 21 destinés à porter les éléments 2 et à les maintenir par mise en oeuvre de seconds moyens d'accrochage 20', les étriers 23 et 23' des deux tailles étant arrangés selon un réseau en paire d'étriers de tailles différentes et en alignements d'étriers de même taille de manière à permettre à leurs sites de montage inclinés respectifs d'être situés dans un même plan incliné.

Ainsi, les seconds éléments supports ou rails profilés 21, reposant selon des arrangements parallèles sur des alignements coïncidants de plots 7 pourvus d'étriers bas 23 ou hauts 23', sont inclinés par rapport aux plans d'appui des embases 8 des plots 7.

De ce fait, les éléments en forme de plaques ou analogues peuvent être disposés au dessus d'une couverture 3 en étant inclinés par rapport à cette dernière, ce en les fixant sur deux côtés opposés à l'aide de moyens d'accrochages 20' à des éléments support profilés 21 filant sous les deux côtés opposés. Les éléments 21 sont eux-mêmes assemblés aux plots 7 par l'intermédiaire d'étriers hauts 23' d'un côté de chaque élément 2 en forme de plaque et par l'intermédiaire d'étriers bas 23 de l'autre côté de chaque élément 2 en forme de plaque.

Ce mode d'assemblage des éléments en forme de plaque 2 permet de favoriser un écoulement de l'eau sur ces éléments 2 sans créer de contraintes mécaniques dans ces éléments 2, ni dans les seconds éléments support profilés 21, et tout en restant à faible distance de la couverture 3.

En relation avec les figures 1 à 5, les points de fixation des éléments 2 en forme de plaques, panneaux ou analogues, peuvent être réglables dans les trois dimensions, avec une possibilité de réglage bidimensionnelle dans un plan parallèle au plan de la couverture 3 grâce à l'ossature formée par les éléments support profilés 18 des plots 7, les seconds éléments profilés 21 et les moyens d'accrochage 20 coulissants et avec une possibilité de réglage dans une direction sensiblement perpendiculaire au plan de la couverture 3 grâce aux plots 7.

Dans le mode de réalisation représenté aux figures 6A et 6B, la fixation mécanique du plastron 11 avec la platine 9 peut être réalisée comme décrit précédemment en relation avec les modes de réalisation des figures 1 à 5. De même, des supports 18 et des pièces de montage intermédiaires 23, 23' précitées peuvent éventuellement être mis en oeuvre.

La fixation des éléments 2 sur les plots 7 des figures 6A et 6B peut s'effectuer soit directement par l'intermédiaire de moyens d'accrochage 20 de forme adaptée (pincement des éléments sur leurs bords latéraux) et en association avec des cales 27 (figure 6B), soit indirectement par l'intermédiaire de seconds moyens d'accrochage 20' associés à des seconds éléments supports 21, ou encore par l'intermédiaire de pièces de montage incliné 23, 23' (non représentées).

L'invention a également pour objet un système de toiture à deux composantes intégrées comprenant une couverture 3 étanche inférieure avec un revêtement ou une couche d'étanchéité 4 en surface, préférentiellement une membrane d'étanchéité synthétique ou bitumineuse, et une couche supérieure composée d'éléments 2 en forme de plaques, panneaux ou analogues, située à distance de la couverture étanche inférieure 3.

Ce système est caractérisé en ce que les éléments 2 de la couche supérieure sont portés et retenus sur la couverture 3 par un dispositif de fixation 1 présentant une ou plusieurs des caractéristiques évoquées ci-dessus, le cas échéant en comportant des plots 7 de types différents selon les variantes de réalisation décrites précédemment.

De manière préférée, mais non limitative, la couverture étanche 3 présente en surface une membrane d'étanchéité bitumineuse 4, faisant éventuellement partie d'un complexe d'étanchéité à deux couches superposées, et les éléments 2 de la couche supérieure consistent en des panneaux photovoltaïques.

La mise en oeuvre de l'invention, en relation avec l'installation de panneaux photovoltaïques 2 sur une couverture étanche 3, peut par exemple comprendre les étapes principales suivantes :
- repérage et marquage de la position des plots 7 sur la couverture 3 en fonction d'un plan ;
- fixer les plots 7 avec leur plastron 11 aux emplacements marqués, par soudage ou autre ;
- vérifier éventuellement le bon assemblage des plots 7 avec leurs plastrons 11 respectifs ;
- mettre en place les rails longitudinaux 21 supportant directement les panneaux 2 sur l'élément ou le corps allongé 18 comme indiqué sur le plan de calepinage ;
- régler, le cas échéant, la hauteur des plots 7 pour aboutir à un contact porteur entre l'ossature et chaque plot 7 ;
- assembler les composantes de l'ossature (rails 21 sur l'élément 18) ;
- mettre en place sur les rails 21 des pièces intermédiaires de protection destinées à supporter les panneaux 2 (avec ou sans cadre) ;
- munir les panneaux 2 de moyens d'accrochage 20' destinés à coopérer avec les rails 21 lors de la pose des panneaux 2 ;
- positionner les panneaux 2 avec blocage en position sur les rails 21.

Enfin, l'invention porte également sur un plot 7 de support et de fixation destiné à faire partie d'un dispositif 1 de fixation tel que décrit précédemment.

Ce plot 7, ressortant des figures 1 et 2, comprend, d'une part, une embase 8 avec une platine 9 inférieure destinée à prendre appui et à être solidarisée à une couche ou un revêtement d'étanchéité 4 formant la composante de surface d'une couverture 3 de toit et, d'autre part, une tête ou partie supérieure 10 destinée à supporter directement ou indirectement un ou plusieurs éléments 2 en forme de plaques, panneaux ou analogues.

Ce plot 7 est principalement caractérisé en ce que la platine 9 de l'embase 8 est pourvue en sous-face d'une portion 11 de plaque, panneau, feuille ou membrane rapportée formant plastron, dont la taille ou surface est préférentiellement supérieure à celle de la platine 9. Ce plastron 11 consiste en un matériau compatible et/ou de même nature que la couche ou le revêtement en surface 4 de la couverture 3 concernée et peut être liée à cette couche ou à ce revêtement 4 par une liaison adhérente.

De plus, ledit plastron est fixé mécaniquement à la platine 9 de l'embase 8, le matériau dudit plastron 11 présentant avantageusement une résistance importante à la déformation et/ou au déchirement.

Les figures 1 à 3, 5 et 6 illustrent différents modes de réalisation d'un tel plot 7.

Comme indiqué précédemment, et pour chaque plot 7, l'embase 8 et la tête 10 peuvent soit former deux parties séparées assemblées entre elles pour constituer le corps dudit plot 7, dont la hauteur est réglable, soit être réalisées d'un seul tenant et former ensemble le corps monobloc du plot 7, ce corps présentant alors préférentiellement une constitution profilée.

Ces différents types de plots 7 peuvent éventuellement être panachés dans un dispositif de fixation selon l'invention.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de fixation d'éléments en forme de plaques, de panneaux ou analogues sur une couverture de toit de bâtiment, à distance de cette dernière, ladite couverture comportant en surface un revêtement ou une couche d'étanchéité rapporté(e) sur le support sensiblement continu formant le toit, sur une couche ou un revêtement d'étanchéité sous-jacent, ou sur une couche d'isolation thermique recouvrant ce support, ce dispositif comprenant des plots d'appui et de maintien à hauteur réglable pour les éléments en forme de plaques, panneaux ou analogues, chacun de ces plots présentant une embase avec une platine inférieure destinée à prendre appui sur la surface de la couverture et à être solidarisée à cette dernière et une tête ou partie supérieure destinée à supporter directement ou indirectement un ou plusieurs éléments en forme de plaques, panneaux ou analogues,
dispositif (1) **caractérisé en ce que** la platine (9) de l'embase (8) d'au moins certains plots (7), préférentiellement de chaque plot (7), est pourvue en sous-face d'une portion (11) de plaque, de panneau, de membrane ou de feuille rapportée formant plastron, dont la surface est préférentiellement supérieure à celle de la platine (9),
**en ce que** chaque plastron (11) consiste en un matériau compatible et/ou de même nature que la couche ou le revêtement en surface (4) de la couverture (3) et est apte à être lié à cette couche ou à ce revêtement (4) par une liaison adhérente, et
**en ce que** chaque plastron (11) est fixé mécaniquement à la platine (9) de l'embase (8) du plot (7) correspondant, le matériau du plastron (11) présentant avantageusement une résistance importante à la déformation et au déchirement.

2. Dispositif selon la revendication 1, **caractérisé en ce que** la fixation mécanique est réalisée en plusieurs points (12), préférentiellement répartis sur le pourtour ou le long de la platine (9) de l'embase (8) du plot (7), chaque point (12) comprenant un élément (13) de fixation mécanique traversant le plastron (11) et associé à une plaquette ou une rondelle (14) destinée à presser localement ledit plastron (11) contre ladite platine (9).

3. Dispositif selon la revendication 1, **caractérisé en ce que** la fixation mécanique est réalisée par pincement d'une partie au moins du plastron (11) entre la platine (9) de l'embase (8) du plot (7) et une contreplaque reliée à ladite platine (9) par des éléments de fixation traversant ledit plastron (11).

4. Dispositif selon l'une quelconque des revendications 1 à 3, **caractérisé en ce que** le plastron (11) est réalisé en un matériau apte et destiné à former une liaison adhérente surfacique avec la couche ou le revêtement (4) en surface de la couverture (3), ladite liaison étant du type choisi dans le groupe formé par les liaisons par collage avec un agent collant rapporté, les liaisons par adhésion à froid et les liaisons par soudure, ladite liaison surfacique adhérente étant prévue pour s'étendre préférentiellement sensiblement à la totalité de la surface du plastron (11).

5. Dispositif selon l'une quelconque des revendications 1 à 4, **caractérisé en ce que** chaque plot (7) est constitué de deux corps (8, 10), préférentiellement réalisés en un matériau synthétique et correspondant respectivement à l'embase (8) et à la tête (10), dont chacune est munie d'une platine (9, 15), les deux corps (8, 10) comportant des rampes de vissage (16, 16') mutuellement coopérantes qui réalisent l'assemblage desdits corps (8, 10) et permettent d'ajuster la distance entre la platine supérieure (15) équipant la tête (10) et la platine inférieure (9) équipant l'embase (8).

6. Dispositif selon l'une quelconque des revendications 1 à 4, **caractérisé en ce que** chaque plot (7) est composé, d'une part, de l'embase (8) formée d'une platine (9) prolongé par ou portant un corps de liaison intermédiaire (17) et, d'autre parts de la tête (10) formée d'une tige filetée (17') ou d'un élément saillant de fixation ou de liaison mécanique analogue et d'un élément support (18) allongé ou surfacique relié rigidement à ladite tige (17') ou analogue, elle-même reliée rigidement au corps intermédiaire de liaison (17), la liaison [élément support (18) / tige filetée ou analogue (17')] et/ou la liaison [tige filetée ou analogue (17') / corps de liaison intermédiaire (17)] autorisant un réglage en hauteur du plot (7) considéré, avec possibilité de blocage en position.

7. Dispositif selon la revendication 5 ou 6, **caractérisé en ce qu'**au moins certains des plots (7) comportent au niveau de l'embase (8), au niveau de la tête (10) ou encore entre ces deux parties constitutives du plot considéré (7), un moyen (22) d'amortissement et/ou d'absorption des chocs et vibrations, par exemple sous la forme d'un cylindre-bloc en un matériau élastomère.

8. Dispositif selon l'une quelconque des revendications 1 à 7, **caractérisé en ce que** la tête ou partie supérieure (10) de chaque plot (7) intègre ou est solidaire d'un corps support allongé ou profilé (18), tel que par exemple un rail s'étendant sensiblement parallèlement à la platine (9) de l'embase (8) du plot (7) considéré, ledit corps support allongé ou profilé (18) comportant des sites d'ancrage (19), discrets ou continus, pour des moyens (20) d'accrochage, soit directement des éléments (2) en forme de plaques, panneaux ou analogue, soit de seconds éléments support ou de rails profilés (21) portant et maintenant ces éléments (2), par exemple par l'intermédiaire de seconds moyens d'accrochage (20'), ou encore de pièces de montage intermédiaires (23, 23') pour ces seconds éléments support profilés (21).

9. Dispositif selon la revendication 8, **caractérisé en ce que** les corps support profilés ou allongés (18) des plots (7) forment avec les seconds éléments support profilés (21) une ossature bidimensionnelle de support et de fixation des éléments (2) en forme de plaques, panneaux ou analogues.

10. Dispositif selon l'une quelconque des revendications 8 et 9, **caractérisé en ce que** les pièces de montage intermédiaires (23, 23') consistent en des étriers intermédiaires d'au moins deux tailles différentes, chaque étrier (23, 23') présentant des pattes inférieures d'accrochage (20) destinées à se fixer dans les site d'ancrage (19) des corps support (18) et une partie supérieure (24) avec un site de montage incliné (24') pour les seconds éléments supports ou rails profilés (21) destinés à porter les éléments (2) et à les maintenir par mise en oeuvre de seconds moyens d'accrochage (20'), les étriers (23, 23') des deux tailles étant arrangés selon un réseau en paire d'étriers de tailles différentes et en alignements d'étriers de même taille de manière à permettre à leurs sites de montage inclinés respectifs d'être situés dans un même plan incliné.

11. Dispositif selon la revendication 9 ou 10, **caractérisé en ce que** les points de fixation des éléments (2) en forme de plaques, panneaux ou analogues, sont réglables dans les trois dimensions, avec une possibilité de réglage bidimensionnelle dans un plan parallèle au plan de la couverture (3) grâce à l'ossature formée par les éléments support profilés (18) des plots (7), les seconds éléments profilés (21) et les moyens d'accrochage (20) coulissants, et avec une possibilité de réglage dans une direction sensiblement perpendiculaire au plan de la couverture (3) grâce aux plots (7).

12. Dispositif selon l'une quelconque des revendications 1 à 11
**caractérisé en ce qu'**au moins la partie supérieure ou tête (10) d'au moins certains plots (7) présentant avantageusement une extension plus importante selon une direction, préférentiellement une constitution profilée.

13. Dispositif de fixation selon la revendication 12, **caractérisé en ce que** chaque plot (7) comprend un corps (8, 10) présentant une structure monobloc, l'embase (8) et la tête (10) étant formées d'un seul tenant.

14. Dispositif de fixation selon la revendication 13, **caractérisé en ce que** le corps (8) consiste en un segment de profilé métallique, la tête (10) formant un rail avec une rainure (25) longitudinale centrale apte à recevoir des moyens d'accrochage (20, 20') et avec deux ailes latérales (26) situées de part et d'autre de la rainure (25), formant des bandes d'appui longitudinales.

15. Dispositif de fixation selon l'une quelconque des revendications 12 à 14, **caractérisé en ce que** la fixation mécanique du plastron (11) avec la platine (9) consiste en une fixation mécanique selon l'une quelconque des revendications 2 et 3, des corps support allongés ou profilés (18) selon la revendication 8 ou 9 et, le cas échéant, des pièces de montage intermédiaires (23, 23') selon la revendication 10 étant éventuellement mises en oeuvre.

16. Système de toiture à deux composantes intégrées comprenant une couverture étanche inférieure avec un revêtement ou une couche d'étanchéité en surface, préférentiellement une membrane d'étanchéité synthétique ou bitumineuse, et une couche supérieure composée d'éléments en forme de plaques, panneaux ou analogues, située à distance de la couverture étanche inférieure,
système **caractérisé en ce que** les éléments (2) de la couche supérieure sont portés et retenus sur la couverture (3) par un dispositif de fixation (1) selon l'une quelconque des revendications 1 à 15.

17. Système selon la revendication 16, **caractérisé en ce que** la liaison adhérente surfacique entre le plastron (11) et la couche ou le revêtement (4) en surface de la couverture (3) est une liaison par collage, l'agent collant étant un agent additionnel rapporté.

18. Système selon la revendication 16, **caractérisé en ce que** la liaison adhérente surfacique entre le plastron (11) et la couche ou le revêtement (4) en surface de la couverture (3) est une liaison par adhésion à froid, la sous-face du plastron (11) comportant un revêtement présentant des propriétés adaptées.

19. Système selon la revendication 16, **caractérisé en ce que** la liaison adhérente surfacique entre le plastron (11) et la couche ou le revêtement (4) en surface de la couverture (3) est une liaison par soudure, le plastron (11) et la couche ou revêtement en surface (4) étant préférentiellement à base de membrane d'étanchéité bitumineuse ou synthétique.

20. Système selon l'une quelconque des revendications 16 à 19, **caractérisé en ce que** la liaison adhérente surfacique entre le plastron (11) et la couche ou le revêtement en surface (4) de la couverture (3) s'étend sensiblement à la totalité de la surface de la sous-face du plastron (11).

21. Système de toiture selon l'une quelconque des revendications 16 à 20, **caractérisé en ce que** la couverture étanche (3) présente en surface une membrane d'étanchéité bitumineuse (4), faisant éventuellement partie d'un complexe d'étanchéité à deux couches superposées, et **en ce que** les éléments (2) de la couche supérieure consistent en des panneaux photovoltaïques.

## Patentansprüche

1. Vorrichtung zur Befestigung von Elementen in Form von Platten, von Paneelen oder dergleichen auf einer Bedachung eines Gebäudedachs unter einem Abstand zu letzterer, wobei die Bedachung an ihrer Oberfläche eine Abdichtverkleidung oder -schicht aufweist, die auf dem im Wesentlichen kontinuierlichen, das Dach bildenden Träger, auf einer darunter liegenden Abdichtschicht oder -verkleidung oder auf einer thermischen Isolationsschicht, welche den Träger bedeckt, aufgebracht ist, wobei die Vorrichtung höhenverstellbare Auflage- und Haltestützen für die Elemente in Form von Platten, Paneelen oder dergleichen aufweist, wobei jede dieser Stützen einen Sockel mit einer unteren Platte, die dazu vorgesehen ist, sich auf der Oberfläche der Bedachung abzustützen und mit letzterer verbunden zu werden, und ein Kopf- oder Oberteil aufweist, das dazu vorgesehen ist, direkt oder indirekt ein oder mehrere Elemente in Form von Platten, Paneelen oder dergleichen zu tragen,
wobei die Vorrichtung (1) **dadurch gekennzeichnet ist, dass** die Platte (9) des Sockels (8) von zumindest manchen Stützen (7), vorzugsweise von jeder Stütze (7), auf der Unterseite mit einem Platten-, Paneelen-, Membran oder Folienabschnitt (11) versehen ist, welcher eine Auflage bildet, deren Fläche vorzugsweise größer ist als die der Platte (9),
dadurch, dass jede Auflage (11) aus einem kompatiblen und/oder gleichartigen Material besteht, wie die Oberflächenschicht oder -verkleidung (4) der Bedachung (3), und dazu eingerichtet ist, mit dieser Schicht oder mit dieser Verkleidung (4) über eine Haftverbindung verbunden zu werden, und
dadurch, dass jede Auflage (11) mechanisch an der Platte (9) des Sockels (8) der entsprechenden Stütze (7) befestigt ist, wobei das Material der Auflage (11) vorzugsweise eine hohe Verformungs- und Reißfestigkeit aufweist.

2. Vorrichtung nach Anspruch 1, **dadurch gekennzeichnet, dass** die mechanische Befestigung an mehreren Stellen (12) realisiert ist, vorzugsweise verteilt über den Umfang oder die Länge der Platte (9) des Sockels (8) der Stütze (7), wobei jede Stelle (12) ein mechanisches Befestigungselement (13) aufweist, welches die Auflage (11) durchdringt und mit einem Plättchen oder einer Unterlagscheibe (14) verbunden ist, die dazu vorgesehen ist, lokal die Auflage (11) gegen die Platte (9) zu pressen.

3. Vorrichtung nach Anspruch 1, **dadurch gekennzeichnet, dass** die mechanische Befestigung über ein Klemmen eines Teils von zumindest der Auflage (11) zwischen der Platte (9) des Sockels (8) der Stütze (7) und einer Gegenplatte realisiert ist, die mit der Platte (9) über Befestigungselemente verbunden ist, welche die Auflage (11) durchdringen.

4. Vorrichtung nach einem der Ansprüche 1 bis 3, **dadurch gekennzeichnet, dass** die Auflage (11) in einem Material realisiert ist, das dazu eingerichtet und vorgesehen ist, eine flächige Haftverbindung mit der Oberflächenschicht oder -verkleidung (4) der Bedachung (3) zu bilden, wobei die Verbindung von einem Typ ist, der aus der Gruppe gewählt ist, die sich aus Klebeverbindungen mit einem aufgetragenen Klebemittel, Kaltadhäsionsverbindungen und Schweißverbindungen zusammensetzt, wobei die flächige Haftverbindung vorgesehen ist, um sich vorzugsweise im Wesentlichen über die gesamte Fläche der Auflage (11) zu erstrecken.

5. Vorrichtung nach einem der Ansprüche 1 bis 4, **dadurch gekennzeichnet, dass** jede Stütze (7) sich aus zwei Körpern (8, 10) zusammensetzt, die vorzugsweise in einem synthetischen Material realisiert sind und jeweils dem Sockel (8) und dem Kopf (10) entsprechen, von welchen jeder mit einer Platte (9, 15) versehen ist, wobei die beiden Körper (8, 10) miteinander zusammenwirkende Gewindeläufe (16, 16') aufweisen, welche das Zusammenfügen der Körper (8, 10) realisieren und es erlauben, den Abstand zwischen der am Kopf (10) vorgesehenen, oberen Platte (15) und der am Sockel (8) vorgesehenen, unteren Platte (9) anzupassen.

6. Vorrichtung nach einem der Ansprüche 1 bis 4, **dadurch gekennzeichnet, dass** jede Stütze (7) sich einerseits aus dem Sockel (8), der aus einer Platte (9) geformt ist, die durch einen Zwischenverbindungskörper (17) fortgesetzt wird oder einen solchen trägt, und andererseits aus dem Kopf (10) zusammensetzt, der aus einem Gewindeschaft (17') oder einem vorspringenden Befestigungselement oder einer ähnlichen mechanischen Verbindung und einem länglichen oder flächigen Tragelement (18) geformt ist, welches fest mit dem Schaft (17') oder ähnlichem verbunden ist, welcher selbst fest mit dem Verbindungszwischenkörper (17) verbunden ist, wobei die Verbindung [Tragelement (18) / Gewindeschaft oder ähnliches (17')] und/oder die Verbindung [Gewindeschaft oder ähnliches (17') / Verbindungszwischenkörper (17)] eine Höhenverstellung der betrachteten Stütze (7) mit der Möglichkeit einer Positionsarretierung erlaubt.

7. Vorrichtung nach Anspruch 5 oder Anspruch 6, **dadurch gekennzeichnet, dass** zumindest manche der Stützen (7) im Bereich des Sockels (8), im Bereich des Kopfes (10) oder weiterhin zwischen den beiden konstituierenden Teilen der betreffenden Stütze (7) ein Dämpfungsmittel und/oder ein Stoß- und Vibrationsabsorbierendes Mittel (22) aufweisen, beispielsweise in Form eines Zylinderblocks aus einem elastomeren Material.

8. Vorrichtung nach einem der vorhergehenden Ansprüche 1 bis 7, **dadurch gekennzeichnet, dass** das Kopf- oder Oberteil (10) jeder Stütze (7) mit einem länglichen oder profilierten Tragkörper (18) eingliedrig oder einstückig ist, wie beispielsweise einer Schiene, die sich im Wesentlichen parallel zur Platte (9) des Sockels (8) der betreffenden Stütze (7) erstreckt, wobei der längliche oder profilierte Tragkörper (18) diskrete oder kontinuierliche Verankerungsstellen (19) aufweist für Mittel (20) zur Befestigung entweder direkt von Elementen (2) in Form von Platten, Paneelen oder dergleichen oder von zweiten Tragelementen oder profilierten Schienen (21), welche diese Elemente (2) tragen und halten, beispielsweise über die Zwischenschaltung von zweiten Mitteln (20') zur Befestigung, oder ferner von Zwischenmontagestücken (23, 23') für diese zweiten profilierten Tragelemente (21).

9. Vorrichtung nach Anspruch 8, **dadurch gekennzeichnet, dass** die profilierten oder länglichen Tragkörper (18) der Stützen (7) mit den zweiten profilierten Tragelementen (21) eine zweidimensionale Konstruktion zum Tragen und Befestigen der Elemente (2) in Form von Platten, Paneelen oder dergleichen formen.

10. Vorrichtung nach einem der Ansprüche 8 und 9, **dadurch gekennzeichnet, dass** die Zwischenmontagestücke (23, 23') sich aus Zwischenbügeln mindestens zweier verschiedener Größen zusammensetzen, wobei jeder Bügel (23, 23') untere Befestigungsfüße (20), die dazu vorgesehen sind, sich an den Verankerungsstellen (19) des Tragkörpers (18) anzulagern, und einen oberen Teil (24) mit einer schrägen Montagestelle (24') für die zweiten Tragelemente oder profilierten Schienen (21) aufweist, welche dafür vorgesehen sind, die Elemente (2) zu tragen und sie mit Hilfe von zweiten Befestigungsmitteln (20') zu halten, wobei die Bügel (23, 23') der beiden Größen gemäß einem paarweisen Netzwerk von Bügeln unterschiedlicher Größe und gemäß einem fluchtenden Netzwerk von Bügeln gleicher Größe in einer Art und Weise angeordnet sind, die es erlaubt, dass deren schräge Montagestellen jeweils in derselben schrägen Ebene angeordnet sind.

11. Vorrichtung nach Anspruch 9 oder 10, **dadurch gekennzeichnet, dass** die Befestigungspunkte der Elemente (2) in Form von Platten, Paneelen oder dergleichen in drei Richtungen verstellbar sind, mit einer Möglichkeit einer zweidimensionalen Verstellung in einer Ebene parallel zur Ebene der Bedachung (3) dank der durch die profilierten Tragelemente (18) der Stützen (7), durch die zweiten profilierten Elemente (21) und durch die verschiebbaren Mittel (20) zur Befestigung gebildeten Konstruktion, und mit einer Möglichkeit der Verstellung in eine Richtung im Wesentlichen senkrecht zur Ebene der Bedachung (3) dank der Stützen (7).

12. Vorrichtung nach einem der Ansprüche 1 bis 11, **dadurch gekennzeichnet, dass** zumindest das Ober- oder Kopfteil (10) von zumindest manchen der Stützen (7) vorzugsweise in eine Richtung eine größere Erstreckung, vorzugsweise eine profilierte Beschaffenheit, aufweist.

13. Vorrichtung zur Befestigung nach Anspruch 12, **dadurch gekennzeichnet, dass** jede Stütze (7) einen Körper (8, 10) aufweist, der eine monolithische Struktur hat, wobei der Sockel (8) und der Kopf (10) einstückig ausgebildet sind.

14. Vorrichtung zur Befestigung nach Anspruch 13, **dadurch gekennzeichnet, dass** der Körper (8) aus einem Metallprofilsegment besteht, wobei der Kopf (10) eine Schiene mit einer longitudinalen zentralen Nut (25), die dazu eingerichtet ist, Mittel (20, 20') zur Befestigung aufzunehmen, und mit zwei Seitenflügeln (26) formt, die beiderseits der Nut (25) als longitudinale Stützstreifen angeordnet sind.

15. Vorrichtung zur Befestigung nach einem der Ansprüche 12 bis 14, **dadurch gekennzeichnet, dass** sich die mechanische Befestigung der Auflage (11) mit der Platte (9) aus einer mechanischen Befestigung nach einem der Ansprüche 2 und 3, aus den länglichen oder profilierten Tragkörper (18) nach Anspruch 8 oder 9 und gesetzten Falles den Zwischenmontagestücken (23, 23') nach Anspruch 10, die gegebenenfalls zur Anwendung kommen, zusammensetzt.

16. Dachsystem mit zwei zusammengehörigen Komponenten, das eine untere, dichte Bedachung mit einer Abdichtverkleidung oder -schicht an der Oberfläche, vorzugsweise einer synthetischen oder bituminösen Dichtmembran, und eine obere Schicht aufweist, die sich aus Elementen in Form von Platten, Paneelen oder dergleichen zusammensetzt, die von der unteren, dichten Bedachung beabstandet angeordnet sind, wobei das System **dadurch gekennzeichnet ist, dass** die Elemente (2) der oberen Schicht auf der Bedachung (3) über eine Vorrichtung zur Befestigung (1) nach einem der Ansprüche 1 bis 15 getragen und gehalten werden.

17. System nach Anspruch 16, **dadurch gekennzeichnet, dass** die flächige Haftverbindung zwischen der Auflage (11) und der Schicht oder der Verkleidung (4) an der Oberfläche der Bedachung (3) eine Klebeverbindung ist, wobei das Klebemittel ein zusätzlich aufgebrachtes Klebemittel ist.

18. System nach Anspruch 16, **dadurch gekennzeichnet, dass** die flächige Haftverbindung zwischen der Auflage (11) und der Schicht oder der Verkleidung (4) an der Oberfläche der Bedachung (3) eine Kaltadhäsionsverbindung ist, wobei die Unterseite der Auflage (11) eine Verkleidung mit angepassten Eigenschaften aufweist.

19. System nach Anspruch 16, **dadurch gekennzeichnet, dass** die flächige Haftverbindung zwischen der Auflage (11) und der Schicht oder der Verkleidung (4) an der Oberfläche der Bedachung (3) eine Schweißverbindung ist, wobei die Auflage (11) und die Oberflächenschicht oder -verkleidung (4) vorzugsweise auf einer bituminösen oder synthetischen Dichtmembran basiert.

20. System nach einem der Ansprüche 16 bis 19, **dadurch gekennzeichnet, dass** die flächige Haftverbindung zwischen der Auflage (11) und der Oberflächenschicht oder -verkleidung (4) der Bedachung (3) sich im Wesentlichen über die Gesamtheit der Fläche der Unterseite der Auflage (11) erstreckt.

21. Dachsystem nach einem der Ansprüche 16 bis 20, **dadurch gekennzeichnet, dass** die dichte Bedachung (3) an der Oberfläche eine bituminöse Dichtmembran (4) aufweist, die gegebenenfalls Teil eines Dichtkomplexes mit zwei übereinander angeordneten Schichten ist, und dadurch, dass die Elemente (2) der oberen Schicht aus Photovoltaikpanels bestehen.

## Claims

1. Device for fixing elements in the form of plates, panels, or the like, on a building roof cover, with spacing from the latter, with said cover comprising at the surface a covering or a sealing layer that is connected to the essentially continuous support that forms the roof, on a layer or a sealing covering that is subjacent, or on a thermal insulation layer that covers this support, with this device comprising studs for support and holding at an adjustable height for the elements in the form of plates, panels, or the like, each of these studs having a base with a small lower plate that is designed to rest on the surface of the cover and to be made integral with the latter, and a head or an upper portion that is designed to support directly or indirectly one or more elements in the form of plates, panels or the like,
device (1) **characterized in that** the small plate (9) of the base (8) of at least certain studs (7), preferably each stud (7), is equipped on the underside with a part (11) of a plate, panel, membrane or connected sheet forming a protector, whose surface area is preferably larger than that of the small plate (9),
**in that** each protector (11) is made of a material that is compatible with and/or of the same nature as the layer or the surface covering (4) of the cover (3) and is able to be linked to this layer or this covering (4) by an adhesive connection, and
**in that** each protector (11) is fixed mechanically to the small plate (9) of the base (8) of the corresponding stud (7), with the material of the protector (11) advantageously having a significant deformation and tear resistance.

2. Device according to Claim 1, **characterized in that** the mechanical attachment is made at several points (12), preferably distributed over the periphery or along the small plate (9) of the base (8) of the stud (7), each point (12) comprising a mechanical attachment element (13) that goes through the protector (11) and is combined with a plate or a washer (14) that is designed to press said protector (11) locally against said small plate (9).

3. Device according to Claim 1, **characterized in that** the mechanical attachment is made by pinching, on the one hand, at least the protector (11) between the small plate (9) of the base (8) of the stud (7) and a counter-plate connected to said small plate (9) by fixing elements that pass through said protector (11).

4. Device according to any of Claims 1 to 3, **characterized in that** the protector (11) is made of a material that is capable of forming and designed to form a surface adhesive connection with the layer or the surface covering (4) of the cover (3), whereby said connection is of the type that is selected from the group that is formed by the connections by bonding with a connected bonding agent, the cold adhesion connections and the welding connections, whereby said adhesive surface connection is provided to extend preferably essentially over the entire surface of the protector (11).

5. Device according to any of Claims 1 to 4, **characterized in that** each stud (7) consists of two bodies (8, 10) that are preferably made of a synthetic material and that correspond respectively to the base (8) and to the head (10), each of which is equipped with a small plate (9, 15), with the two bodies (8, 10) comprising screwing ramps (16, 16') that work together and that produce the assembly of said bodies (8, 10) and make it possible to adjust the distance between the small upper plate (15) that equips the head (10) and the small lower plate (9) that equips the base (8).

6. Device according to any of Claims 1 to 4, **characterized in that** each stud (7) consists of, on the one hand, the base (8) that is formed by a small plate (9) that is extended by or that carries an intermediate connecting body (17), and, on the other hand, the head (10) that is formed by a threaded rod (17') or a projecting attachment element or analogous mechanical connection and an elongated or surface support element (18) that is connected rigidly to said rod (17') or the like, which itself is connected rigidly to the intermediate connecting body (17), the connection [support element (18)/threaded rod or the like (17')] and/or the connection [threaded rod or the like (17')/intermediate connecting body (17)] allowing a height adjustment of the stud (7) that is being considered, with a possibility of locking in position.

7. Device according to Claim 5 or 6, **characterized in that** at least some of the studs (7) comprise at the base (8), at the head (10), or else between these two constituent parts of the stud (7) that is being considered, a means (22) for damping and/or absorption of shocks and vibrations, for example, in the form of a cylinder block made of an elastomer material.

8. Device according to any of Claims 1 to 7, **characterized in that** the head or the upper portion (10) of each stud (7) integrates or is integral with an elongated or profiled support body (18), such as, for example, a rail that extends essentially parallel to the small plate (9) of the base (8) of the stud (7) that is being considered, with said elongated or profiled support body (18) comprising individual or continuous anchoring sites (19) for hooking means (20), either directly elements (2) in the form of plates, panels or the like, or second support elements or profiled rails (21) that carry and hold these elements (2), for example by means of second hooking means (20') or else intermediate mounting parts (23, 23') for these second profiled support elements (21).

9. Device according to Claim 8, **characterized in that** the profiled or elongated support bodies (18) of the studs (7) form with the second profiled support elements (21) a two-dimensional framing of support and attachment of the elements (2) in the form of plates, panels or the like.

10. Device according to any of Claims 8 and 9, **characterized in that** the intermediate mounting parts (23, 23') consist of intermediate fastenings of at least two different sizes, with each fastening (23, 23') having lower hooking feet (20), designed to be fixed in the anchoring sites (19) of the support body (18), and an upper portion (24) with an inclined mounting site (24') for the second support elements or profiled rails (21) that are designed to carry the elements (2) and to hold them by using second hooking means (20'), with the fastenings (23, 23') of the two sizes being arranged according to a network in a pair of fastenings of different sizes and in alignments of fastenings of the same size in such a way as to allow their respective inclined mounting sites to be located in the same inclined plane.

11. Device according to Claim 9 or 10, **characterized in that** the attachment points of the elements (2) in the form of plates, panels or the like can be adjustable within the three dimensions, with a possibility of two-dimensional adjustment in a plane that is parallel to the plane of the cover (3) owing to the framing formed by the profiled support elements (18) of the studs (7), the second profiled elements (21), and the sliding hooking means (20), and with possible adjustment in a direction that is essentially perpendicular to the plane of the cover (3) owing to the studs (7).

12. Device according to anyone of Claims 1 to 11, **characterized in that** at least the upper portion or head (10) of at least certain studs (7) advantageously having a larger extension in one direction, preferably a profiled composition.

13. Attachment device according to Claim 12, **characterized in that** each stud (7) comprises a body (8, 10) that has a one-piece structure, with the base (8) and the head (10) being formed from a single piece.

14. Attachment device according to Claim 13, **characterized in that** the body (8) consists of a metal profiled segment, with the head (10) forming a rail with a central longitudinal groove (25) that can accommodate hooking means (20, 20') and with two side wings (26) that are located on either side of the groove (25), forming longitudinal support strips.

15. Attachment device according to any of Claims 12 to 14, **characterized in that** the mechanical attachment of the protector (11) with the small plate (9) consists of a mechanical attachment according to any of Claims 2 and 3, with the elongated or profiled support bodies (18) according to Claim 8 or 9, and if necessary, intermediate mounting parts (23, 23') according to Claim 10 optionally being used.

16. Roofing system with two integrated components comprising a lower airtight cover with a covering or a surface sealing layer, preferably a synthetic or bituminous sealing membrane, and an upper layer that consists of elements in the form of plates, panels or the like, located with spacing from the lower airtight cover,
system **characterized in that** the elements (2) of the upper layer are carried and held on the cover (3) by an attachment device (1) according to any of Claims 1 to 15.

17. System according to Claim 16, **characterized in that** the surface adhesive connection between the protector (11) and the layer or the covering (4) on the surface of the cover (3) is a connection by bonding, with the bonding agent being an additional connected agent.

18. System according to Claim 16, **characterized in that** the surface adhesive connection between the protector (11) and the layer or the surface covering (4) of the cover (3) is a cold adhesion connection, with the underside of the protector (11) comprising a covering that has suitable properties.

19. System according to Claim 16, **characterized in that** the surface adhesive connection between the protector (11) and the layer or the surface covering (4) of the cover (3) is a connection by welding, the protector (11) and the layer or surface covering (4) being preferably based on a bituminous or synthetic sealing membrane.

20. System according to any of Claims 16 to 19, **characterized in that** the surface adhesive connection between the protector (11) and the layer or the surface covering (4) of the cover (3) extends essentially over the entire surface of the underside of the protector (11).

21. Roofing system according to any of Claims 16 to 20, **characterized in that** the airtight cover (3) has on the surface a bituminous sealing membrane (4), optionally being part of a sealing complex with two superposed layers, and **in that** the elements (2) of the upper layer consist of photovoltaic panels.
